(19) Europäisches Patentamt
European Patent Office
Office européen des brevets

(11) **EP 3 170 407 B1**

(12) **EUROPEAN PATENT SPECIFICATION**

(45) Date of publication and mention
of the grant of the patent:
**04.09.2024 Bulletin 2024/36**

(21) Application number: **15821954.3**

(22) Date of filing: **15.07.2015**

(51) International Patent Classification (IPC):
***A23L 5/00*** *(2016.01)*       ***A23P 20/10*** *(2016.01)*
***A23L 19/00*** *(2016.01)*

(52) Cooperative Patent Classification (CPC):
**A23L 17/75; A23L 7/198; A23L 13/03; A23L 19/05;**
**A23L 29/225; A23P 20/10;** A23P 2020/251

(86) International application number:
**PCT/JP2015/070217**

(87) International publication number:
**WO 2016/010059 (21.01.2016 Gazette 2016/03)**

(54) **TEMPURA BATTER MIX**

TEMPURA-BACKTEIGMISCHUNG

MÉLANGE DE PÂTE À FRIRE POUR TEMPURA

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **15.07.2014   JP 2014144791**

(43) Date of publication of application:
**24.05.2017 Bulletin 2017/21**

(73) Proprietor: **Nisshin Seifun Welna Inc.**
**Tokyo 101-8441 (JP)**

(72) Inventors:
• **FUJIMURA, Ryosuke**
**Tokyo 103-8544 (JP)**

• **NISHIDE, Tatsunori**
**Tokyo 103-8544 (JP)**

(74) Representative: **Wächtershäuser & Hartz
Patentanwaltspartnerschaft mbB
Weinstraße 8
80333 München (DE)**

(56) References cited:
**WO-A1-97/29653        JP-A- 2000 308 462
JP-A- 2008 067 675      JP-A- 2008 067 675
JP-A- 2008 253 145      JP-A- H08 140 610
JP-A- H11 318 366       JP-A- H11 318 367
JP-A- S5 716 663        JP-B1- 5 265 821
JP-B1- S4 627 333       US-A- 6 010 736**

**Description**

Technical Field

The present invention relates to a tempura batter mix.

Background Art

Tempura is a food obtained by adhering a batter, which is composed mainly of wheat flour and water, to ingredients such as seafood and vegetables and then deep-frying the ingredients in oil. The outer coating of tempura has a crisp texture, which is achieved by deep-frying in oil, while the ingredient inside the coating has a juicy taste and texture with *umami* (pleasant savory taste) trapped inside due to steam-like cooking. These features work together to create a nice unique taste and texture. The tempura coating should preferably have a so-called flower bloom-like, voluminous appearance (fluffiness), while it is required to have a crisp and crunchy texture.

A method generally used for making tempura includes flouring ingredients, then entirely covering the ingredients with a batter obtained by mixing wheat flour with water, and then deep-frying the ingredients in oil. Unfortunately, the batter becomes more viscous as the time elapses from the preparation, which results in low workability as well as a poor coating texture after deep-frying in oil. Therefore, in order to make fluffy tempura with a crisp texture, it is required, for example, to cook quickly after the preparation of a batter, to flour ingredients and adhere the ingredients with the batter in a proper amount, not too much or too little, and to further sprinkle an additional batter during deep-frying in the oil bath (in other words, putting an additional batter on the surface of tempura to increase the volume of the coating during deep-frying), which means that sophisticated skills and complicated procedures are necessary.

There have been proposed tempura batter mixes that have good workability or make it possible to prepare tempura having a coating with a good fluffiness and texture. For example, Patent Literature 1 discloses a tempura batter mix including: a heat-treated wheat flour having an R/E ratio of 8 to 12 as determined with Brabender Extensograph; and an emulsifying agent. Patent Literature 2 discloses a batter material that includes a heat-moisture-treated wheat flour having a degree of gelatinization of 12.5% to 30% and having a viscosity of 1 Pa·s to 10 Pa·s when the heat-moisture-treated wheat flour is added with 300% by mass of water based on the mass of the four. Patent Literature 3 discloses that a mix for deep-frying includes a deep-frying batter composition containing a compression-treated starch and that the mix is used in the form of a batter with a viscosity of about 700 to about 1,500 mPa·s. Patent Literature 4 discloses a tempura batter mix flour containing modified rice flour that is produced by applying at least one of compressive force, impact force, frictional force, and shearing force to rice grains or a rice flour and has a degree of swelling of 4.5 or more and a maximum gelatinization viscosity of 500 BU or less as determined by Amylograph. Patent Literature 4 also discloses that a batter is prepared to have a viscosity of 800 to 2,000 mPa when adding water thereto. Patent Literature 5 discloses a deep-frying batter composition including a batter material and a composite including crystalline cellulose and propylene glycol alginate. Patent Literature 5 also discloses that the viscosity of the batter used for tempura is adjusted to fall within the range of 100 to 10,000 mPa·s.

Further mixes for preparing tempura batter, which comprise soft wheat flour, are known from WO-97/29653 and US-6010736.

Citation List

Patent Literatures

    Patent Literature 1: JP 11-318366 A
    Patent Literature 2: JP 2008-67675 A
    Patent Literature 3: JP 2011-125332 A
    Patent Literature 4: JP 2010-104246 A
    Patent Literature 5: JP 2011-152087 A

Summary of Invention

Technical Problem

Unfortunately, the conventional batter material containing heat-treated wheat flour still remains unsatisfactory for simple preparation of tempura with a good appearance and texture, for example, because when deep-frying in oil without further sprinkling an additional batter, it results in insufficient fluffiness. In addition, the conventional batter material has a low adhesion property to non-floured ingredients and thus has a problem with workability.

Solution to Problem

The present invention provides a tempura batter mix that has a good adhesion property to ingredients and makes it possible to easily prepare tempura having a coating with a crisp texture and a fluffy voluminous appearance only by deep-frying in oil after dipping in a batter.

Specifically, the present invention provides a tempura batter mix comprising:

12.5 to 35% by mass of a heat-moisture-treated soft wheat flour having a degree of gelatinization of 12.5 to 30% and having a viscosity of 1 to 10 Pa·s when the heat-moisture treated wheat flour is added with 300% by mass of water at 15°C based on the mass of the flour;

0.01 to 4% by mass of at least one emulsifying agent selected from the group consisting of a polyglycerol fatty acid ester, a sucrose fatty acid ester, lecithin, and an organic acid monoglyceride, and further comprising

5 to 30% by mass of an oil/fat-treated starch.

Advantageous Effects of Invention

The tempura batter mix of the present invention has a good adhesion property to ingredients. The tempura batter mix of the present invention can well adhere even to non-floured ingredients while the mix does not adhere to the ingredients in an excessive amount, but adheres in a suitable amount. The tempura batter mix of the present invention also makes it possible to form a tempura coating with a crisp texture and a flower bloom-like, voluminous appearance (fluffiness) only by deep-frying in oil after dipping in batter. According to the tempura batter mix of the present invention, it is capable of easily preparing fluffy tempura with a good texture, which would otherwise require sophisticated skills and complicated procedures in the conventional art.

Description of Embodiments

The tempura batter mix of the present invention comprises a heat-moisture-treated soft wheat flour having a degree of gelatinization of 12.5 to 30% and having a viscosity of 1 to 10 Pa·s when the heat-moisture-treated soft wheat flour is added with 300% by mass of water based on the mass of the flour; and at least one emulsifying agent selected from the group consisting of a polyglycerol fatty acid ester, a sucrose fatty acid ester, lecithin, and an organic acid monoglyceride.

In the tempura batter mix of the present invention, the heat-moisture-treated soft wheat flour has a degree of gelatinization of 12.5% to 30%, preferably 12.5% to 25.0%, more preferably 15.0% to 25.0% and has a viscosity of 1 to 10 Pa·s, preferably 2.0 to 5.0 Pa·s, when the heat-moisture-treated wheat flour is added with 300% by mass of water based on the mass of the flour. If the heat-moisture-treated soft wheat flour has a degree of gelatinization of less than 12.5% or has a viscosity of less than 1 Pa·s when the heat-moisture-treated soft wheat flour is added with 300% by mass of water based on the mass of the flour, the resulting batter may have an insufficient viscosity and a low adhesion property, failing to sufficiently improve the fluffiness or voluminous appearance of the tempura coating after deep-frying in oil. On the other hand, if the heat-moisture-treated soft wheat flour has a degree of gelatinization of more than 30% or has a viscosity of more than 10 Pa·s when the heat-moisture-treated soft wheat flour is added with 300% by mass of water based on the mass of the flour, the resulting batter may have a high viscosity and a too high adhesion property, resulting in an insufficient appearance or texture of the tempura coating after deep-frying in oil.

A raw wheat flour for the heat-moisture-treated soft wheat flour used in the present invention is not particularly limited, as long as, after the heat-moisture treatment, the wheat flour has a degree of gelatinization in the above range and achieves a viscosity in the above range.

The heat-moisture-treated soft wheat flour for use in the present invention can be produced by a process including: subjecting a raw wheat flour to a heat-moisture treatment, which includes adding water or water vapor to the flour and heating the flour; then drying the treated flour; and optionally grinding the dried flour. The heating medium is preferably superheated water vapor or saturated water vapor. Specifically, the heat-moisture-treated wheat flour is preferably produced by bringing superheated water vapor or saturated water vapor into direct contact with the raw wheat flour to heat it. As a more specific example, the heat-moisture-treated wheat flour can be produced by a process including: placing the raw wheat flour directly in a closed container heated by heating means such as a jacket; and, while stirring as needed, blowing superheated water vapor or saturated water vapor into the closed container to heat the raw wheat flour. The heating conditions are preferably a temperature of 80 to 130°C for a time of about 1 second to about 5 minutes. The heating conditions may be appropriately controlled so as to produce a heat-moisture-treated wheat flour with a desired degree of gelatinization. After the heat-moisture treatment, the drying may be performed by shelf drying, hot air drying, fluidized bed drying, or other drying methods. After drying, the grinding may be performed by various means such as roll grinding, and pin mill grinding.

For ease of preparation of the batter, the heat-moisture-treated soft wheat flour for use in the present invention preferably has an average particle size of less than 400 um, more preferably 40 to 300 um, even more preferably 55 to 200 um. The heat-moisture-treated soft wheat flour with too large a particle size may be difficult to disperse in water in the process of preparing the batter. In the description, the average particle size of the heat-moisture-treated soft wheat flour means the volume average diameter measured by laser diffraction/scattering method using a particle size distribution analyzer. The particle size distribution analyzer may be, for example, Microtrack MT3000II (manufactured by NIKKISO CO. , LTD.). In order to adjust the average particle size of the heat-moisture-treated wheat flour to the above range, the heat-moisture-treated soft wheat flour after heating or grinding may be classified into desired sizes using known means such as a sieve or a classifier.

The content of the heat-moisture-treated soft wheat flour in the tempura batter mix of the present invention is preferably from 12.5 to 35% by mass, more preferably from 15 to 25% by mass, based on the total mass of the mix. If the content of the heat-moisture-treated soft wheat flour is less than 12.5% by mass, the resulting batter may tend to have a low adhesion property to ingredients. On the other hand, if the content of the heat-moisture-treated soft wheat flour is more than 35% by mass, the resulting batter may take a relatively long time to cook thoroughly and may tend to form a coating with a relatively hard texture after deep-frying in oil.

In the tempura batter mix of the present invention, the emulsifying agent is one or a combination of two or more selected from the group consisting of a polyglycerol fatty acid ester, a sucrose fatty acid ester, lecithin, and an organic acid monoglyceride. In this regard, the polyglycerol fatty acid ester is an ester of a fatty acid and polyglycerol, which is a polymer of glycerol. The sucrose fatty acid ester is an ester of a fatty acid and sucrose. Lecithin is a triglyceride with one fatty acid replaced by a phosphoric acid compound. The organic acid monoglyceride is an ester of an organic acid and glycerin. Examples of the organic acid include acetic acid, lactic acid, citric acid, succinic acid, and diacetyltartaric acid, among which citric acid is preferred. The content of the emulsifying agent in the tempura batter mix of the present invention is preferably from 0.01 to 4% by mass, more preferably from 0.01 to 3% by mass, even more preferably from 0.03 to 1% by mass, based on the total mass of the mix. If the content of the emulsifying agent is less than 0.01% by mass, the resulting tempura coating after deep-frying in oil may tend to be less fluffy or to have a hard texture. On the other hand, if the content of the emulsifying agent is more than 4% by mass, the resulting batter may tend to have a low adhesion property to ingredients.

In addition to the heat-moisture-treated soft wheat flour and the emulsifying agent, an oil/fat-treated starch is added to the tempura batter mix of the present invention so that the resulting tempura coating can have a further improved adhesion property and fluffiness. The oil/fat-treated starch refers to a starch with a small amount of oil and/or fat adhering to the surface thereof. The oil/fat-treated starch for use in the present invention is preferably prepared by mixing 100 parts by mass of starch and 0.01 to 30 parts by mass of oil and/or fat homogenously and then drying the mixture. If necessary, the mixture may be heat-treated before or after drying.

The type of starch as a raw material for the oil/fat-treated starch is not particularly limited, examples of which include unmodified starches such as corn starch, waxy corn starch, tapioca starch, potato starch, wheat starch, and rice starch, and modified starches such as gelatinization products, etherification products, esterification products, crosslinking products, and oxidation products of these starches. Any one of these starches may be used alone or two or more in combination. The type of oil and/or fat to be mixed with the raw starch is not particularly limited as long as it is an edible type, examples of which include soybean oil, rapeseed oil, cottonseed oil, safflower oil, sunflower oil, rice oil, corn oil, palm oil, perilla oil, beef tallow, and lard. Any one of these may be used alone or two or more in combination. An oil-rich grain flour, such as non-defatted soy flour, may also be used as a partial or entire alternative to the edible oil and/or fat.

The content of the oil/fat-treated starch in the tempura batter mix of the present invention is 5 to 30% by mass, preferably from 5 to 20% by mass, based on the total mass of the mix. If the content of the oil/fat-treated starch is more than 30% by mass, the effect of improving the fluffiness or texture of tempura coating may tend to decrease.

In addition to the materials described above, the tempura batter mix of the present invention may contain a grain flour and/or starch. The grain flour is preferably wheat flour (non-heat-moisture-treated wheat flour). Examples of the wheat flour include soft flour, moderate flour, semi-hard flour, hard flour, and durum wheat flour, among which soft flour is preferred. Examples of the grain flour other than wheat flour include whole wheat flour, barley flour, rye flour, rice flour, sorghum flour, and corn flour. Any one of these flours may be used alone or two or more in combination. Examples of the starch include unmodified starches and modified starches (non-oil/fat-treated starches) listed above as raw materials for the oil/fat-treated starch. The tempura batter mix of the present invention may contain one or a combination of two or more of the above grain flours and starches. The content of the grain flour and/or the starch in the tempura batter mix of the present invention may be from 30 to 87% by mass, preferably from 45 to 80% by mass, based on the total mass of the mix.

If necessary, the tempura batter mix of the present invention may further contain other materials commonly used in tempura batter mixes, such as materials selected from, for example, baking powders; egg powders such as egg white powders and whole egg powders; proteins; thickening agents such as thickening polysaccharides; seasonings such as salt, soy sauce powders, fermented seasonings, saccharides and amino acids; spices; flavors; nutrients such as vitamins; colorants; and powdered oils and fats. The type and amount of these other materials may be adjusted as appropriate depending on the desired properties of tempura and other factors.

The tempura batter mix of the present invention can be produced by mixing the heat-moisture-treated soft wheat flour, the emulsifying agent, the grain flour and/or the starch, and the oil/fat-treated starch and other materials. The tempura batter mix of the present invention may be, but not limited to, in the form of a powder or granules.

A process of making tempura using the tempura batter mix of the present invention may include previously preparing a batter containing the batter mix of the present invention, adhering the batter to an ingredient, and then deep-frying the ingredient in oil. The batter for use in making tempura can be prepared, for example, by adding 100 to 200 parts by mass, preferably 120 to 190 parts by mass, more preferably 135 to 175 parts by mass of a liquid such as water to 100 parts by mass of the batter mix of the present invention, and mixing them. It should be noted that the amount of the liquid such as water may be adjusted depending on the type of ingredients for tempura. In this process, the viscosity of the batter is preferably adjusted to 1 to 4.5 Pa·s, more preferably 2.1 to 3.9 Pa·s. The batter with a viscosity in the range can have an improved adhesion property to ingredients and can form a fluffier tempura coating. In the description, the viscosity of the batter refers to a value obtained by measuring the viscosity of the batter having a temperature of 15°C to 25°C using a B-type viscometer.

Examples of the ingredient include, but are not limited to, seafood such as prawn and shrimp, squid, and sea-gudgeon, meat such as chicken, pork, and beef, and vegetables such as potatoes, eggplants, pumpkins, carrots, onions, and mushrooms, among which seafood and vegetables are preferred. The ingredient may be floured before the batter is adhered to the ingredient, although it is not essential.

The process of adhering the batter to the surface of the ingredient may include dipping the ingredient in the batter or applying or spraying the batter on the ingredient. According to conventional methods, the ingredient adhered with the batter may then be deep-fried in oil at 160 to 180°C for about 2 to about 8 minutes to make tempura.

The tempura prepared using the tempura batter mix of the present invention is of high quality, having a coating with a crisp texture and a fluffy appearance, even without flouring the ingredient in advance or without further sprinkling an additional batter during deep-frying in oil.

In the description, the degree of gelatinization of the heat-moisture-treated wheat flour, the viscosity with respect to the heat-moisture-treated wheat flour, and the viscosity of a batter are values determined as described below.

<Measurement of degree of gelatinization>

The degree of gelatinization (also called the degree of pregelatinization) is measured by β-amylase-pullulanase method or β-amylase-amyloglucosidase method, which is conventional in the art. Hereinafter, the procedure of β-amylase-amyloglucosidase method will be described.

(A) Reagents

The reagents to be used are as follows:

(1) 0.8 M acetic acid-sodium acetate buffer
(2) 10 N sodium hydroxide solution
(3) 2 N acetic acid solution
(4) Enzyme solution obtained by dissolving 0.017 g of β-amylase (#1500S, Nagase ChemteX Corporation) and 0.005 g of amyloglucosidase (10115-1G-F, Sigma Aldrich) in reagent (1) (0.8 M acetic acid-sodium acetate buffer) to make a 200 mL solution
(5) Deactivated enzyme solution prepared by boiling reagent (4) (enzyme solution) for 10 minutes
(6) Somogyi reagent and Nelson reagent (reagents for measuring reducing sugar content)

(B) Measurement method

(1) Heat-moisture-treated wheat flour is ground into 100 meshes or finer using a homogenizer. The ground heat-moisture-treated wheat flour is added in an amount of 0.08 to 0.10 g to a glass homogenizer.
(2) To the glass homogenizer, 8.0 mL of demineralized water is added, and the mixture is dispersed by allowing the glass homogenizer to move up and down 10 to 20 times.

(3) Two mL aliquots of the dispersion prepared in the step (2) are added to each of two 25-mL-volume graduated test tubes. Subsequently, one of the aliquots is diluted to a certain volume with the 0.8 M acetic acid-sodium acetate buffer and then used as a test fraction.

(4) To the other aliquot, 0.2 mL of the 10 N sodium hydroxide solution is added and then allowed to react at 50°C for 3 to 5 minutes so that the aliquot is completely gelatinized. Subsequently, after 1.0 mL of the 2 N acetic acid solution is added to the aliquot to adjust the pH to around 6.0, the aliquot is diluted to a certain volume with the 0.8 M acetic acid-sodium acetate buffer and then used as a gelatinized fraction.

(5) A sample solution is taken in an amount of 0.4 mL from each of the test fraction and the gelatinized fraction prepared in the steps (3) and (4). Subsequently, 0.1 mL of the enzyme solution is added to each of the sample solution and then subjected to enzyme reaction at 40°C for 30 minutes. At the same time, a blank is prepared by adding 0.1 mL of the deactivated enzyme instead of the enzyme solution to each of the sample solution. The enzyme reaction is performed while the reaction liquid is intermittently stirred during the reaction.

(6) To 0.5 mL of the reaction liquid, 0.5 mL of the Somogyi reagent is added and then boiled in a boiling bath for 15 minutes . After boiling, the sample solution is cooled in flowing water for 5 minutes, and then 1.0 mL of the Nelson reagent is added to the sample solution and stirred. The mixture is then allowed to stand for 15 minutes.

(7) Subsequently, 8.00 mL of demineralized water is added to the mixture and then stirred. The mixture is then measured for absorbance at 500 nm.

(C) Calculation of degree of gelatinization

The following formula is used to calculate the degree of gelatinization.

$$\text{Degree (\%) of gelatinization} = \frac{\text{Degree of decomposition of test sample solution}}{\text{Degree of decomposition of completely gelatinized sample solution}} \times 100 = \frac{(A-a)}{(A'-a')} \times 100$$

A = Absorbance of test fraction
A' = Absorbance of gelatinized fraction
a = Absorbance of blank for test fraction
a' = Absorbance of blank for gelatinized fraction

<Measurement of viscosity>

For the measurement of the viscosity with respect to a heat-moisture-treated wheat flour when adding thereto 300% by mass of water based on the mass of the flour, 300 g of a heat-moisture-treated wheat flour and 900 mL of cold water at about 15°C are prepared.

For the measurement of the viscosity of a batter, the tempura batter mix of the present invention and cold water are prepared (100 to 200 parts by mass of cold water at about 15°C relative to 100 parts by mass of the mix).

(A) Preparation of batter

The cold water is poured into a bowl (manufactured by Hobart), and the flour is added onto the cold water. The flour and the water are mixed thoroughly by appropriately stirring with a wire whip (manufactured by Hobart) . Subsequently, they are stirred firstly for 30 seconds and secondly for 240 seconds with a mixer (manufactured by Hobart).

(B) Measurement method

Ten minutes after stirring with the mixer, the viscosity of the resulting mixture is measured using a BM-type viscometer.

Examples

Hereinafter, the present invention will be more specifically described with reference to examples. It will be understood that the examples are not intended to limit the present invention.

(Reference Examples 1 to 6)

Soft wheat flour (Flour, manufactured by Nisshin Flour Milling Inc.) was introduced into a closed high-speed mixing machine with its temperature maintained by using a jacket and saturated water vapor was introduced at different temperatures for different blowing periods of time into the mixing machine to carry out heat-moisture treatment, to thereby obtain heat-moisture-treated wheat flours of Reference Examples 1 to 6. Table 1 shows the degree of gelatinization of each heat-moisture-treated soft wheat flour and the viscosity thereof when adding thereto 300% by mass of water based on the mass of the flour. Each heat-moisture-treated soft wheat flour had an average particle size in the range of 61 to 97 um.

[Table 1]

|  | Reference Example 1 | Reference Example 2 | Reference Example 3 | Reference Example 4 | Reference Example 5 | Reference Example 6 |
|---|---|---|---|---|---|---|
| Degree of gelatinization | 10.4 | 12.5 | 18.2 | 29.9 | 30.0 | 37.6 |
| Viscosity (Pa·s) | 0.9 | 1.0 | 3.2 | 9.4 | 10.6 | 13.1 |

(REFERENCE Preparation Examples 1 to 12)

Tempura batter mixes of REFERENCE Preparation Examples 1 to 12 were each prepared by mixing the materials shown in Table 2.

(Test Example 1) (REFERENCE)

A batter was prepared by mixing 100 g of each of the tempura batter mixes of Preparation Examples 1 to 12 with 150 cc of water. Deshelled prawn with tail (20 g per prawn) were dipped in each batter to be adhered well. The batter-adhered prawns were deep-fried for 2 minutes in salad oil heated at 170°C. The obtained tempura pieces were taken out of the oil bath, drained oil off, and then allowed to stand at room temperature (about 25°C) for 5 minutes. Subsequently, the quality of the tempura pieces was evaluated by 10 panelists based on the evaluation criteria shown in Table 3, and then the scores were averaged. Table 2 shows the results.

[Table 2]

| Mix formulation | Preparation Example | | | | | | | | | | | |
|---|---|---|---|---|---|---|---|---|---|---|---|---|
|  | 1+ | 2+ | 3+ | 4+ | 5+ | 6+ | 7+ | 8+ | 9+ | 10+ | 11+ | 12+ |
| Heat-moisture-treated wheat flour Reference Example 1 | - | 20 | - | - | - | - | - | - | - | - | - | - |
| Reference Example 2 | - | - | 20 | - | - | - | - | - | - | - | - | - |
| Reference Example 3 | - | - | - | 20 | - | - | - | 20 | 20 | 20 | 20 | 20 |
| Reference Example 4 | - | - | - | - | 20 | - | - |  | - | - | - | - |
| Reference Example 5 | - | - | - | - | - | 20 | - | - | - | - | - | - |
| Reference Example 6 | - | - | - | - | - | - | 20 | - | - | - | - | - |
| Polyglycerol fatty acid ester *1 | 1 | 1 | 1 | 1 | 1 | 1 | 1 | - | - | - | - | - |
| Sucrose fatty acid ester *2 | - | - | - | - | - | - | - | 1 | - | - | - | - |
| Lecithin *3 | - | - | - | - | - | - | - | - | 1 | - | - | - |
| Organic acid monoglyceride *4 | - | - | - | - | - | - | - | - | - | 1 | - | - |
| Glycerol fatty acid ester *5 | - | - | - | - | - | - | - | - | - | - | 1 | - |
| Wheat flour *6 | 99 | 79 | 79 | 79 | 79 | 79 | 79 | 79 | 79 | 79 | 79 | 80 |

(continued)

| Mix formulation | Preparation Example | | | | | | | | | | | |
|---|---|---|---|---|---|---|---|---|---|---|---|---|
| | 1+ | 2+ | 3+ | 4+ | 5+ | 6+ | 7+ | 8+ | 9+ | 10+ | 11+ | 12+ |
| Heat-moisture-treated wheat flour Total | 100 | 100 | 100 | 100 | 100 | 100 | 100 | 100 | 100 | 100 | 100 | 100 |
| Appearance of tempura | 1.7 | 2.1 | 4.2 | 4.4 | 4.3 | 3.2 | 2.6 | 4.2 | 3.9 | 4.1 | 2.3 | 1.7 |
| Texture of tempura | 3.4 | 3.2 | 3.9 | 4.0 | 3.8 | 2.8 | 1.7 | 3.9 | 3.8 | 3.6 | 2.1 | 1.5 |

+: Reference
*1: Poem DS-100A, manufactured by RIKEN VITAMIN Co., Ltd.
*2: Ryoto Sugar Ester S-370, manufactured by Mitsubishi-Kagaku Foods Corporation
*3: Lecion P, manufactured by RIKEN VITAMIN Co., Ltd.
*4: Poem B-10, manufactured by RIKEN VITAMIN Co., Ltd.
*5: Emulsy MS Powder, manufactured by RIKEN VITAMIN Co., Ltd.
*6: Flour, manufactured by Nisshin Flour Milling Inc.

[Table 3]

| | 5 | Sufficiently voluminous appearance with suitable level of fluffy roughness |
|---|---|---|
| Appearance of tempura | 4 | Voluminous appearance with fluffy roughness in part |
| | 3 | Non-fluffy appearance with roughness in part |
| | 2 | Non-fluffy appearance with slightly insufficient roughness and volume |
| | 1 | Entirely smooth coating with insufficient roughness and volume |
| Texture of tempura | 5 | Excellent coating with high crispness and crunchiness |
| | 4 | Good coating with crispness |
| | 3 | Coating somewhat lacking crispness |
| | 2 | Slightly hard or sticky coating with low crispness |
| | 1 | Bad coating with no crispness, too hard or very sticky |

(REFERENCE Preparation Examples 13 to 18)

Tempura batter mixes of Preparation Examples 13 to 18 were each prepared by mixing the raw materials shown in Table 4.

(Test Example 2) (REFERENCE)

As in Test Example 1, prawn tempura pieces were prepared using each of the tempura batter mixes of Preparation Examples 13 to 18. The quality of the prepared tempura pieces was evaluated as in Test Example 1. Table 4 shows the results. Note that Table 4 shows again the results of Preparation Example 4.

[Table 4]

| Mix formulation | Preparation Example | | | | | | |
|---|---|---|---|---|---|---|---|
| | 13+ | 14+ | 15+ | 4+ | 16+ | 17+ | 18+ |
| Heat-moisture-treated wheat flour (Reference Example 3) | 10 | 12.5 | 15 | 20 | 25 | 35 | 40 |
| Polyglycerol fatty acid ester *1 | 1 | 1 | 1 | 1 | 1 | 1 | 1 |
| Wheat flour *2 | 89 | 86.5 | 84 | 79 | 74 | 64 | 59 |
| Total | 100 | 100 | 100 | 100 | 100 | 100 | 100 |

(continued)

| Mix formulation | Preparation Example | | | | | | |
|---|---|---|---|---|---|---|---|
| | 13+ | 14+ | 15+ | 4+ | 16+ | 17+ | 18+ |
| Appearance of tempura | 3.6 | 3.9 | 4.1 | 4.4 | 4.2 | 4.0 | 3.9 |
| Texture of tempura | 3.6 | 3.6 | 3.7 | 4.0 | 3.8 | 3.7 | 3.4 |
| +: Reference<br>*1: Poem DS-100A, manufactured by RIKEN VITAMIN Co., Ltd.<br>*2: Flour, manufactured by Nisshin Flour Milling Inc. | | | | | | | |

(REFERENCE Preparation Examples 19 to 25)

Tempura batter mixes of Preparation Examples 19 to 25 were each prepared by mixing the raw materials shown in Table 5.

(Test Example 3) (REFERENCE)

As in Test Example 1, prawn tempura pieces were prepared using each of the tempura batter mixes of Preparation Examples 19 to 25. The quality of the prepared tempura pieces was evaluated as in Test Example 1. Table 5 shows the results. Note that Table 5 shows again the results of Preparation Example 4.

[Table 5]

| Mix formulation | Preparation Example | | | | | | | |
|---|---|---|---|---|---|---|---|---|
| | 19+ | 20+ | 21+ | 4+ | 22+ | 23+ | 24+ | 25+ |
| Heat-moistu re-treated wheat flour (Reference Example 3) | 20 | 20 | 20 | 20 | 20 | 20 | 20 | 20 |
| Polyglycerol fatty acid ester *1 | 0.005 | 0.01 | 0.03 | 1 | 2 | 3 | 4 | 5 |
| Sucrose fatty acid ester *2 | - | - | - | - | - | - | - | - |
| Wheat flour *3 | Balance | Balance | Balance | Balance | Balance | Balance | Balance | Balance |
| Total | 100 | 100 | 100 | 100 | 100 | 100 | 100 | 100 |
| Appearance of tempura | 3.5 | 4.1 | 4.3 | 4.4 | 4.2 | 4.1 | 3.9 | 3.3 |
| Texture of tempura | 3.6 | 3.8 | 3.8 | 4.0 | 3.8 | 3.7 | 3.6 | 3.1 |
| +: Reference<br>*1: Poem DS-100A, manufactured by RIKEN VITAMIN Co., Ltd.<br>*2: Ryoto Sugar Ester S-370, manufactured by Mitsubishi-Kagaku Foods Corporation<br>*3: Flour, manufactured by Nisshin Flour Milling Inc. | | | | | | | | |

(Preparation Examples 26 to 30)

Tempura batter mixes of Preparation Examples 26 to 30 were each prepared by mixing the raw materials shown in Table 6. The oil/fat-treated starch used in these preparation examples was produced by adding 0.2 parts by mass of salad oil to 99.98 parts by mass of phosphate-crosslinked tapioca starch (manufactured by Matsutani Chemical Industry Co., Ltd.), mixing them uniformly, and then drying the mixture.

(Test Example 4) (INVENTION)

As in Test Example 1, prawn tempura pieces were prepared using each of the tempura batter mixes of Preparation Examples 26 to 30. The quality of the prepared tempura pieces was evaluated as in Test Example 1. Table 6 shows the results. Note that Table 6 shows again the results of Preparation Example 4.

[Table 6]

| Mix formulation | Preparation Example | | | | | |
|---|---|---|---|---|---|---|
| | 4+ | 26 | 27 | 28 | 29 | 30+ |
| Heat-moisture-treated wheat flour (Reference Example 3) | 20 | 20 | 25 | 30 | 35 | 40 |
| Polyglycerol fatty acid ester *1 | 1 | 1 | 1 | 1 | 1 | 1 |
| Oil/fat-treated starch | - | 5 | 10 | 20 | 30 | 40 |
| Wheat flour *2 | 79 | 74 | 64 | 49 | 34 | 19 |
| Total | 100 | 100 | 100 | 100 | 100 | 100 |
| Appearance of tempura | 4.4 | 4.5 | 4.7 | 4.8 | 4.6 | 4.3 |
| Texture of tempura | 4.0 | 4.3 | 4.5 | 4.5 | 4.3 | 4.0 |

+: Reference
*1: Poem DS-100A, manufactured by RIKEN VITAMIN Co., Ltd.
*2: Flour, manufactured by Nisshin Flour Milling Inc.

Claims

1. A tempura batter mix comprising:

   12.5 to 35% by mass of a heat-moisture-treated soft wheat flour having a degree of gelatinization of 12.5 to 30% and having a viscosity of 1 to 10 Pa·s when the heat-moisture treated wheat flour is added with 300% by mass of water at 15°C based on the mass of the flour;
   0.01 to 4% by mass of at least one emulsifying agent selected from the group consisting of a polyglycerol fatty acid ester, a sucrose fatty acid ester, lecithin, and an organic acid monoglyceride, and. further comprising 5 to 30% by mass of an oil/fat-treated starch.

2. The tempura batter mix according to claim 1, further comprising 30 to 87% by mass of a grain flour, a starch, or a combination thereof.

3. A use of a composition comprising:

   12.5 to 35% by mass of a heat-moisture-treated soft wheat flour that has a degree of gelatinization of 12.5 to 30% and having a viscosity of 1 to 10 Pa·s when the heat-moisture-treated wheat flour is added with 300% by mass of water at 15°C based on the mass of the flour;
   0.01 to 4% by mass of at least one emulsifying agent selected from the group consisting of a polyglycerol fatty acid ester, a sucrose fatty acid ester, lecithin, and an organic acid monoglyceride;
   30 to 87% by mass of a grain flour, a starch, or a combination thereof; and
   5 to 30% by mass of an oil/fat-treated starch; for providing a tempura batter mix.

4. Use of the tempura batter mix according to any one of claims 1 or 2 for the preparation of a tempura batter.

5. A method for preparing a tempura batter, the method comprising mixing 100 parts by mass of the tempura batter mix according to any one of claims 1 or 2 with 100 to 200 parts by mass of water.

6. A tempura batter, comprising: 100 parts by mass of the tempura batter mix according to any one of claims 1 or 2; and 100 to 200 parts by mass of water.

7. A method for preparing tempura, comprising: adhering the tempura batter according to claim 6 to an ingredient; and then deep-frying the adhered ingredient in oil.

**Patentansprüche**

1. Tempura-Teigmischung, die folgendes umfasst: 12,5 bis 35 Massenprozent eines mit Wärme und Feuchtigkeit behandelten Weichweizenmehls, das einen Verkleisterungsgrad von 12,5 bis 30 % und eine Viskosität von 1 bis 10 Pa s aufweist, wenn dem mit Wärme und Feuchtigkeit behandelten Weizenmehl 300 Massenprozent Wasser, bezogen auf die Masse des Mehls, bei 15°C zugesetzt werden; 0,01 bis 4 Massenprozent wenigstens eines Emulgators, ausgewählt aus der Gruppe, bestehend aus einem Polyglycerinfettsäureester, einem Saccharosefettsäureester, Lecithin und einem organischen Säuremonoglycerid, und die ferner 5 bis 30 Massenprozent einer mit Öl/Fett behandelten Stärke umfasst.

2. Tempura-Teigmischung nach Anspruch 1, ferner 30 bis 87 Massenprozent eines Getreidemehls, einer Stärke oder einer Kombination derselben umfassend.

3. Verwendung einer Zusammensetzung, die folgendes umfasst: 12,5 bis 35 Massenprozent eines mit Wärme und Feuchtigkeit behandelten Weichweizenmehls, das einen Verkleisterungsgrad von 12,5 bis 30 % und eine Viskosität von 1 bis 10 Pa s aufweist, wenn dem mit Wärme und Feuchtigkeit behandelten Weizenmehl 300 Massenprozent Wasser, bezogen auf die Masse des Mehls, bei 15°C zugesetzt werden; 0,01 bis 4 Massenprozent wenigstens eines Emulgators, ausgewählt aus der Gruppe, bestehend aus einem Polyglycerinfettsäureester, einem Saccharosefettsäureester, Lecithin und einem organischen Säuremonoglycerid, 30 bis 87 Massenprozent eines Getreidemehls, einer Stärke oder einer Kombination derselben; und 5 bis 30 Massenprozent einer mit Öl/Fett behandelten Stärke, zur Herstellung einer Tempura-Teigmischung.

4. Verwendung der Tempura-Teigmischung nach einem der Ansprüche 1 oder 2 zur Herstellung einer Tempura-Teigmischung.

5. Verfahren zur Herstellung einer Tempura-Teigmischung, wobei das Verfahren das Mischen von 100 Massenteilen der Tempura-Teigmischung nach einem der Ansprüche 1 oder 2 mit 100 bis 200 Massenteilen Wasser umfasst.

6. Tempurateig, umfassend 100 Massenteile der Tempura-Teigmischung nach einem der Ansprüche 1 oder 2 und 100 bis 200 Massenteile Wasser.

7. Verfahren zur Zubereitung von Tempura, umfassend das Anhaften des Tempura-Teigs nach Anspruch 6 an eine Zutat und anschließendes Frittieren der anhaftenden Zutat in Öl.

**Revendications**

1. Mélange de pâte à frire pour tempura comprenant :

   12,5 à 35 % en masse d'une farine de blé tendre traitée à la chaleur et à l'humidité présentant un degré de gélatinisation de 12,5 à 30 % et présentant une viscosité de 1 à 10 Pa·s lorsque la farine de blé traitée à la chaleur et à l'humidité est ajoutée à 300 % en masse d'eau à 15 °C sur la base de la masse de la farine ;
   0,01 à 4 % en masse d'au moins un agent émulsifiant sélectionné parmi le groupe consistant en un ester de polyglycérol d'acide gras, un ester de saccharose d'acide gras, une lécithine et un monoglycéride d'acide organique, et comprenant en outre 5 à 30 % en masse d'un amidon traité par huile/graisse.

2. Mélange de pâte à frire pour tempura selon la revendication 1, comprenant en outre 30 à 87 % en masse d'une farine de grain, d'un amidon, ou d'une combinaison de ceux-ci .

3. Utilisation d'une composition comprenant :

   12,5 à 35 % en masse d'une farine de blé tendre traitée à la chaleur et à l'humidité qui présente un degré de gélatinisation de 12,5 à 30 % et présentant une viscosité de 1 à 10 Pa·s lorsque la farine de blé traitée à la chaleur et à l'humidité est ajoutée à 300 % en masse d'eau à 15 °C sur la base de la masse de la farine ;

0,01 à 4 % en masse d'au moins un agent émulsifiant sélectionné parmi le groupe consistant en un ester de polyglycérol d'acide gras, un ester de saccharose d'acide gras, une lécithine et un monoglycéride d'acide organique ;

30 à 87 % en masse d'une farine de grain, d'un amidon, ou d'une combinaison de ceux-ci ; et 5 à 30 % en masse d'un amidon traité par huile/graisse ; pour fournir un mélange de pâte à frire pour tempura.

4.  Utilisation du mélange de pâte à frire pour tempura selon l'une des revendications 1 ou 2 pour la préparation d'une pâte à frire pour tempura.

5.  Procédé de préparation d'une pâte à frire pour tempura, le procédé comprenant de mélanger 100 parties en masse du mélange de pâte à frire pour tempura selon l'une des revendications 1 ou 2 avec 100 à 200 parties en masse d'eau.

6.  Pâte à frire pour tempura comprenant : 100 parties en masse du mélange de pâte à frire pour tempura selon l'une des revendications 1 ou 2 ; et 100 à 200 parties en masse d'eau.

7.  Procédé de préparation d'une tempura, comprenant : d'adhérer la pâte à frire pour tempura selon la revendication 6 à un ingrédient ; et de faire frire dans l'huile l'ingrédient ayant adhéré.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9729653 A
- US 6010736 A
- JP 11318366 A
- JP 2008067675 A
- JP 2011125332 A
- JP 2010104246 A
- JP 2011152087 A